# EUROPÄISCHE PATENTSCHRIFT

(11) **EP 3 023 159 B1**
(45) Veröffentlichungstag und Bekanntmachung des Hinweises auf die Patenterteilung: **25.12.2019**
(21) Anmeldenummer: 15200416.4
(22) Anmeldetag: 24.03.2014
(51) Int. Cl.: B03D 1/02, B03D 1/14, C02F 1/24

(54) **MIKROFLOTATIONSANLAGE MIT EINER ENTSPANNUNGSVENTILANORDNUNG UND VERFAHREN ZUM BETREIBEN EINER MIKROFLOTATIONSANLAGE**
MICROFLOTATION ASSEMBLY WITH A RELAXATION VALVE ASSEMBLY AND METHOD FOR OPERATING A MICROFLOTATION ASSEMBLY
INSTALLATION DE MICRO-FLOTTATION DOTEE D'UN SYSTEME DE SOUPAPES DE DECOMPRESSION ET PROCEDE DE FONCTIONNEMENT D'UNE INSTALLATION DE MICRO-FLOTTATION

(43) Veröffentlichungstag der Anmeldung: 25.05.2016
(62) Teilanmeldung aus: 14161317.4
(73) Patentinhaber: Damann, Roland, 33106 Paderborn (DE); Damann, Volker, 33165 Lichtenau (DE)
(72) Erfinder: DAMANN, Roland, 33106 Paderborn (DE)
(74) Vertreter: Hauck Patentanwaltspartnerschaft mbB

(56) Entgegenhaltungen:
- WO-A1-2013/003012
- US-A- 5 693 222
- JOHANNES HAARHOFF ET AL: "Adapting dissolved air flotation for the clarification of seawater", DESALINATION., Bd. 311, 1. Februar 2013 (2013-02-01), Seiten 90-94, XP055264534, NL ISSN: 0011-9164, DOI: 10.1016/j.desal.2012.10.035
- NG N J ET AL: "Palm Oil Mill Effluent Treatment - Liquid-Solid Separation With Dissolved Air Flotation", BIOLOGICAL WASTES, ELSEVIER, NL, Bd. 25, Nr. 4, 1. Januar 1988 (1988-01-01) , Seiten 257-268, XP002364045, ISSN: 0269-7483, DOI: 10.1016/0269-7483(88)90087-0

## Beschreibung

Die Erfindung betrifft eine Mikroflotationsanlage mit einem Reaktorbehälter, in dem Wasser unter erhöhtem Druck mit einem Gas angereichert wird. Das so gebildete Dispersionswasser wird über eine Entspannungsventilanordnung einem Flotationsbecken zugeführt. Bei der Entspannung des Dispersionswassers bilden sich in dem Flotationsbecken Mikroblasen, die langsam aufsteigen und sich dabei an Verunreinigungen anlagern und diese an die Oberfläche des Flotationsbeckens transportieren. Solche Mikroflotationsanlagen sind zur Reinigung der unterschiedlichsten Abwässer geeignet und zeichnen sich grundsätzlich durch einen weitgehend wartungsfreien und kostengünstigen Betrieb aus.

Ein Kostenfaktor für den Betrieb der Mikroflotationsanlagen ist der Energiebedarf für die Herstellung des Dispersionswassers. Hierzu muss eine ausreichende Gasmenge in das Wasser eingebracht werden und es muss ein erhöhter Druck erzeugt und aufrechterhalten werden. Die Menge an Mikroblasen, die zur Reinigung des Abwassers erforderlich ist, hängt von der Beschaffenheit des Abwassers ab.

Bei bekannten Mikroflotationsanlagen kann die Menge des dem Flotationsbecken zugeführten Dispersionswassers durch eine einmalige Einstellung eines Entspannungsventils justiert werden. Ein Richtwert lautet, dass für eine zufriedenstellende Reinigung etwa 10 Liter Dispersionswasser pro Kilogramm Feststoffgehalt des Abwassers zugeführt werden müssen. Unberücksichtigt bleibt, wieviel Gas tatsächlich in dem über das Entspannungsventil zugeführten Dispersionswasser gelöst ist.

Aus dem US-Patent Nr. 5,693,222 ist bekannt geworden, eine Trübung des in einer Mikroflotationsanlage gereinigten Abwassers zu messen und bei starker Trübung ein Entspannungsventil automatisch so anzusteuern, dass mehr Gas zugeführt wird. Auf diese Weise wird ein optimales Gas-Feststoff-Verhältnis angestrebt.

Aus der Druckschrift WO 2013/003012 A1 sind Mikroflotationsanlagen bekannt geworden, bei denen die Luft innerhalb einer speziellen Pumpe ("*air dissolving pump*") in der zu behandelnden Flüssigkeit gelöst wird. Unterschiedliche Betriebsparameter können in Abhängigkeit von mit Sensoren erfassten Messwerten gesteuert oder geregelt werden.

Der Fachartikel "Adapting dissolved air flotation for the clarification of seawater", DESALINATION, Bd. 311, 1. Februar 2013, Seiten 90-94, von Johannes Haarhoff et al. beschreibt eine wissenschaftliche Studie, in der es um eine Anwendung von Mikroflotationsanlagen zur Reinigung von Meerwasser im Vorfeld einer Entsalzung geht. Untersucht worden sind die Unterschiede der für die Mikroflotation wichtigen Eigenschaften des Meerwassers im Vergleich zu Süßwasser, insbesondere die Löslichkeit der in Luft enthaltenen Gase.

Davon ausgehend ist es die Aufgabe der Erfindung, eine Mikroflotationsanlage zur Verfügung zu stellen, die besonders energieeffizient arbeitet, sowie ein Verfahren zum Betreiben einer solchen Mikroflotationsanlage.

Diese Aufgabe wird gelöst durch die Mikroflotationsanlage mit den Merkmalen des Anspruchs 1. Vorteilhafte Ausgestaltungen sind in den sich anschließenden Unteransprüchen angegeben.

Die Mikroflotationsanlage hat
- einen Reaktorbehälter, der einen Wasserzulauf aufweist und dazu ausgebildet ist, über den Wasserzulauf zugeführtes Wasser unter erhöhtem Druck mit einem Gas anzureichern und das so gebildete Dispersionswasser an einem Dispersionswasserauslauf zur Verfügung zu stellen,
- ein Flotationsbecken, das einen Dispersionswasserzulauf aufweist,
- eine Entspannungsventilanordnung, über die der Dispersionswasserauslauf mit dem Dispersionswasserzulauf verbunden ist,
- eine Messeinrichtung, die dazu ausgebildet ist, mindestens einen Parameter des über den Wasserzulauf zuzuführenden Wassers, von dem die Löslichkeit des Gases in dem Wasser abhängig ist, zu messen,
- eine Verstelleinrichtung, mit der eine Durchflussmenge der Entspannungsventilanordnung einstellbar ist, und
- eine elektronische Steuerung, die mit der Messeinrichtung und der Verstelleinrichtung verbunden und dazu ausgebildet ist, die Durchflussmenge in Abhängigkeit eines von der Messeinrichtung gemessenen Parameters einzustellen.

Bei dem Gas kann es sich insbesondere um Luft handeln. In dem Reaktorbehälter wird das Gas in dem Wasser gelöst, im Idealfall, bis eine Sättigungskonzentration erreicht ist. Hierzu kann in dem Reaktorbehälter ein Gaspolster ausgebildet werden, dass kontinuierlich abgearbeitet wird. Das so entstehende Gas-Wasser-Gemisch, also das Wasser mit dem darin gelösten Gas, wird als Dispersionswasser bezeichnet. Durch den erhöhten Druck kann eine relativ große Gasmenge in dem Wasser gelöst werden. Zugleich ermöglicht er eine nachfolgende Entspannung auf den Umgebungsdruck, die zu der erwünschten Mikroblasenbildung führt. Bei geeigneter Prozessführung und Gestaltung der Entspannungsventilanordnung kann das Größenspektrum der Mikroblasen so eingestellt werden, dass ein Großteil der Mikroblasen Durchmesser im Bereich von etwa 20 µm bis etwa 50 µm aufweist, wodurch eine optimale Reinigungswirkung erzielt wird.

Das dem Reaktorbehälter zugeführt Wasser kann beispielsweise einem Klarwasserablauf des Flotationsbeckens entnommen werden, sodass ein Teil des gereinigten Abwassers für die Herstellung des Dispersionswassers eingesetzt wird.

Die Erfindung beruht auf der Erkenntnis, dass die Menge des dem Flotationsbecken zugeführten Gases, die naturgemäß der Menge der erzeugbaren Mikroblasen entspricht, nicht nur von der Durchflussmenge, also von der Menge des zugeführten Dispersionswassers, sondern ebenso von der Menge des darin gelösten Gases abhängig ist. Die Löslichkeit des Gases in dem Wasser, also die Menge des Gases pro Mengeneinheit Wasser, bei der die Sättigungskonzentration erreicht ist, hängt dabei von zahlreichen Parametern ab, insbesondere von der Temperatur, dem pH-Wert, dem Salzgehalt, dem Fett-/Ölgehalt, dem chemischen Sauerstoffbedarf (CSB), der Färbung, der Trübung, dem Redoxpotential, dem Sauerstoffgehalt oder dem Gehalt eines sonstigen Gases oder dem Feststoffgehalt (TSS total suspended solids) des Wassers. Beispielsweise nimmt die Löslichkeit des Gases in Wasser in der Regel mit steigender Temperatur ab. Im Wasser gelöste Feststoffe, beispielsweise Salze, können die Löslichkeit des Gases in dem Wasser ebenfalls verringern. Ein veränderlicher Gasgehalt in dem Dispersionswasser führt nicht nur zu einer Änderung der insgesamt in das Flotationsbecken eingebrachten Gasmenge, sondern kann zugleich das angestrebte Größenspektrum der Mikroblasen stören und zu einer inhomogenen Blasenbildung führen. Hierdurch wird die Reinigungswirkung unter Umständen stark beeinträchtigt.

Bei der Erfindung wird mindestens ein solcher Parameter gemessen und bei der Prozessführung berücksichtigt. Es versteht sich, dass wahlweise mehrere der genannten Parameter von der Messeinrichtung gemessen werden und bei der Ansteuerung der Entspannungsventilanordnung berücksichtigt werden können. Ist beispielsweise auf Grundlage einer relativ hohen Temperatur mit einer geringeren Löslichkeit des Gases in dem Wasser zu rechnen, muss die Durchflussmenge der Entspannungsventilanordnung erhöht werden, sodass eine größere Menge an Dispersionswasser zugeführt werden kann und die Menge des damit zugeführten Gases konstant bleibt. Dadurch kann vermieden werden, dass es unter Betriebsbedingungen, bei denen relativ wenig Gas in dem Wasser gelöst werden kann, zu einer nachlassenden Reinigungswirkung infolge einer zu geringen Menge an Mikroblasen kommt. Gleichzeitig kann verhindert werden, dass bei einer relativ hohen Löslichkeit des Gases in dem Wasser mehr Gas zugeführt wird, als für die angestrebte Reinigungswirkung notwendig. Im Idealfall wird stets exakt diejenige Gasmenge mit dem Dispersionswasser in das Flotationsbecken eingebracht, die für die angestrebte Reinigungswirkung erforderlich ist. Somit wird eine optimale Reinigungsleistung bei minimalem Energieeinsatz erreicht.

Bei der Erfindung sind in der elektronischen Steuerung Daten über eine Abhängigkeit der Löslichkeit des Gases in Wasser von dem gemessenen Parameter hinterlegt. Die Daten können beispielsweise in Form von mathematischen Funktionen oder in Tabellenform hinterlegt sein. Die elektronische Steuerung kann auf diese hinterlegten Daten zugreifen und eine auf Grundlage dieser Daten ermittelte Löslichkeit des Gases in dem Wasser bei der Ansteuerung der Entspannungsventilanordnung berücksichtigen.

Bei der Erfindung ist die elektronische Steuerung dazu ausgebildet, die Durchflussmenge derart einzustellen, dass die Menge des mit dem Dispersionswasser über den Dispersionswasserzulauf dem Flotationsbecken zugeführten Gases von dem gemessenen Parameter unbeeinflusst bleibt. Auf diese Weise können beispielsweise Schwankungen der Temperatur oder des pH-Werts des Wassers kompensiert werden. Verändert sich ein gemessener Parameter derart, dass sich die Löslichkeit des Gases in dem Wasser um einen bestimmten Prozentsatz erhöht, kann die Durchflussmenge um eben diesen Prozentsatz verringert werden, oder umgekehrt. Auf diese Weise bleibt die Menge des zugeführten Gases konstant. Es versteht sich, dass es in der Praxis kaum möglich ist, den Einfluss eines der Parameter vollständig zu kompensieren. Mit dem "unbeeinflusst bleiben" ist daher nicht nur eine vollständige Kompensation, sondern auch eine fast vollständige Kompensation oder zumindest eine deutliche Verringerung des Einflusses des Parameters gemeint.

In einer Ausgestaltung weist die Entspannungsventilanordnung ein Entspannungsventil mit einem verstellbaren Öffnungsgrad und die Verstelleinrichtung einen Stellantrieb auf, mit dem der Öffnungsgrad verstellbar ist. In diesem Fall wird die Durchflussmenge der Entspannungsventilanordnung durch ein Verstellen des Öffnungsgrades des Entspannungsventils eingestellt. Das Entspannungsventil kann beispielsweise ein Kegelventil sein.

In einer Ausgestaltung weist die Entspannungsventilanordnung eine Vielzahl von Entspannungsventilen auf. Die Entspannungsventile können sämtlich mit dem Dispersionswasserauslauf verbunden sein. Ausgangsseitig können die Entspannungsventile an unterschiedlichen Positionen in das Flotationsbecken führen. Es kann sich um Entspannungsventile mit verstellbarem Öffnungsgrad handeln, wie zuvor beschrieben. Alternativ kann es sich um einfache Entspannungsventile handeln, die lediglich geöffnet oder vollständig abgesperrt werden können. In diesem Fall kann die Durchflussmenge durch die Anzahl der von der elektronischen Steuerung geöffneten bzw. geschlossenen Entspannungsventile gesteuert werden.

In einer Ausgestaltung weist die Messeinrichtung einen Messfühler auf, der in dem Wasserzulauf, in dem Flotationsbecken oder in einem Schmutzwasserzulauf des Flotationsbeckens angeordnet ist. Bei Anordnung des Messfühlers im Wasserzulauf des Reaktorbehälters, also entweder unmittelbar am Reaktorbehälter oder auch davon beabstandet in einer Leitung, die zum Reaktorbehälter führt, können die Eigenschaften des mit dem Gas anzureichernden Wassers am genauesten erfasst werden. Es ist jedoch auch möglich, den Messfühler im Flotationsbecken oder in einem Schmutzwasserzulauf des Flotationsbeckens anzuordnen, weil die dort erfassten Messwerte ebenfalls Aufschluss über die Eigenschaften des dem Reaktorbehälter zugeführten Wassers geben, jedenfalls wenn das dem Reaktorbehälter zugeführte Wasser dem Flotationsbecken, insbesondere einem Klarwasserablauf des Flotationsbeckens, entnommen wird. Beispielsweise wird sich die Temperatur des verunreinigten Wassers im Schmutzwasserzulauf nur unwesentlich von der Temperatur im Wasserzulauf des Reaktorbehälters unterscheiden bzw. wird in bekannter Weise davon abhängig sein, sodass die erfassten Messwerte von der elektronischen Steuerung in geeigneter Weise korrigiert werden können.

Erfindungsgemäß ist eine weitere Messeinrichtung vorhanden, die dazu ausgebildet ist, einen Feststoffgehalt des Schmutzwassers zu messen, wobei die elektronische Steuerung mit der weiteren Messeinrichtung und mit einer Drucksteuerung des Reaktorbehälters verbunden und dazu ausgebildet ist, den erhöhten Druck in dem Reaktorbehälter in Abhängigkeit von dem mit der weiteren Messeinrichtung gemessenen Feststoffgehalt zu steuern. Die Menge des dem Flotationsbecken zugeführten Gases kann also zusätzlich durch eine Anpassung des Drucks in dem Reaktorbehälter an den Feststoffgehalt des Schmutzwasser angepasst werden.

In einer Ausgestaltung ist dem Flotationsbecken eine steuerbare Räumeinrichtung zugeordnet und die elektronische Steuerung ist dazu ausgebildet, eine Räumleistung der Räumeinrichtung in Abhängigkeit von dem gemessenen Feststoffgehalt zu steuern. Die Menge des von der Räumeinrichtung zu entfernenden Flotats hängt von dem Feststoffgehalt des Schmutzwassers ab. Es ist daher zweckmäßig, die Räumleistung, beispielsweise die Geschwindigkeit einer Bewegung der Räumeinrichtung, an den Feststoffgehalt anzupassen. Auch diese Maßnahme trägt dazu bei, die Mikroflotationsanlage besonders energieeffizient zu betreiben.

In einer Ausgestaltung ist die elektronische Steuerung dazu ausgebildet, die Menge des von einer Flockungsmittelzuführeinrichtung zugeführten Flockungsmittels in Abhängigkeit von dem gemessenen Feststoffgehalt zu steuern. Die Flockungsmittelzuführeinrichtung kann beispielsweise an einem Schmutzwasserzulauf des Flotationsbeckens angeordnet sein. Durch die Anpassung der Menge des Flockungsmittels an den Feststoffgehalt kann das Flockungsmittel besonders sparsam dosiert werden.

Die oben genannte Aufgabe wird ebenfalls gelöst durch das Verfahren mit den Merkmalen des Anspruchs 8. Vorteilhafte Ausgestaltungen sind in den sich anschließenden Unteransprüchen angegeben.

Das Verfahren dient zum Betreiben einer Mikroflotationsanlage und weist die folgenden Schritte auf:
- Herstellen von Dispersionswasser durch Anreichern von Wasser mit einem Gas unter erhöhtem Druck,
- Zuführen des Dispersionswassers zu einem Flotationsbecken,
- Messen mindestens eines Parameters des Wassers, von dem die Löslichkeit des Gases in dem Wasser abhängig ist,
- Steuern einer Durchflussmenge des dem Flotationsbecken zugeführten Dispersionswassers in Abhängigkeit von dem gemessenen Parameter derart, dass die Menge des dem Flotationsbecken mit dem Dispersionswasser zugeführten Gases von Änderungen des erfassten Parameters unbeeinflusst bleibt.

Das Verfahren kann insbesondere zum Betreiben einer Mikroflotationsanlage mit den Merkmalen eines der Ansprüche 1 bis 7 eingesetzt werden. Zur Erläuterung der Merkmale und Vorteile des Verfahrens wird auf die vorstehenden Erläuterungen der Mikroflotationsanlage verwiesen, die entsprechend gelten.

Bei der Erfindung wird die Durchflussmenge so gesteuert, dass die Menge des dem Flotationsbecken mit dem Dispersionswasser zugeführten Gases von Änderungen des erfassten Parameters unbeeinflusst bleibt. Hierzu wird auf die vorstehenden Erläuterungen der korrespondierenden Vorrichtungsmerkmale verwiesen.

Erfindungsgemäß wird ein Feststoffgehalt von dem Flotationsbecken zugeführten Schmutzwasser gemessen und der erhöhte Druck in dem Reaktorbehälter wird in Abhängigkeit von dem gemessenen Feststoffgehalt gesteuert. Auch hierzu wird auf die vorstehenden Erläuterungen der korrespondierenden Vorrichtungsmerkmale verwiesen.

In einer Ausgestaltung wird eine Räumleistung einer dem Flotationsbecken zugeordneten Räumeinrichtung in Abhängigkeit von dem gemessenen Feststoffgehalt gesteuert. Auch hierzu wird auf die vorstehenden Erläuterungen der korrespondierenden Vorrichtungsmerkmale verwiesen.

Die Erfindung wird nachfolgend anhand eines in einer Figur dargestellten Ausführungsbeispiels näher erläutert.

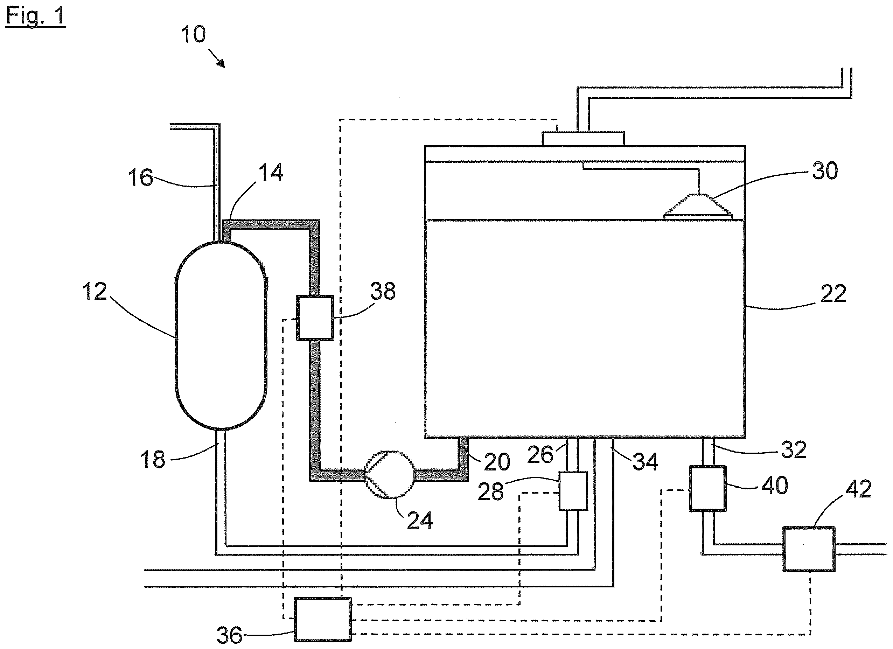

- Fig. 1: zeigt eine erfindungsgemäße Mikroflotationsanlage in einer schematischen Darstellung.

Die Mikroflotationsanlage 10 in Figur 1 weist einen Reaktorbehälter 12 auf, dem über einen Wasserzulauf 14 Wasser zugeführt wird. Über eine Gasleitung 16 wird dem Reaktorbehälter 12 außerdem ein Gas, insbesondere Luft, zugeführt. In dem Reaktorbehälter 12, der unter einem erhöhten Druck steht, beispielsweise im Bereich von 1,5 bar bis 4 bar, wird das Gas mit dem Wasser gemischt, sodass sich das Gas in dem Wasser löst. Das im Idealfall mit dem Gas gesättigte Wasser wird als Dispersionswasser bezeichnet und kann dem Reaktorbehälter 12 über den Dispersionswasserauslauf 18 entnommen werden.

Der Wasserzulauf 14 ist über eine Leitung mit einem Klarwasserauslauf 20 eines Flotationsbeckens 22 verbunden. In der Leitung ist eine Pumpe 24 angeordnet. Das Flotationsbecken 22 weist außerdem einen Dispersionswasserzulauf 26 auf, der über eine Leitung, in der eine Entspannungsventilanordnung 28 angeordnet ist, mit dem Dispersionswasserauslauf 18 des Reaktorbehälters 12 verbunden ist. Auf diese Weise wird das Dispersionswasser dem Flotationsbecken 22 zugeführt.

Beim Durchströmen der Entspannungsventilanordnung 28 kommt es zu einer Druckentspannung und infolgedessen zu einer Bildung von Mikroblasen, die in dem Flotationsbecken 22 langsam aufsteigen, sich dabei an Verunreinigungen anlagern und diese an die Oberfläche tragen. Dort wird das sich auf diese Weise bildende Flotat von einer Räumeinrichtung 30 abgesaugt.

Das zu reinigende Schmutzwasser wird dem Flotationsbecken 22 über einen Schmutzwasserzulauf 32 zugeführt. Das gereinigte Abwasser kann über den weiteren Klarwasserauslauf 34 dem Flotationsbecken 22 zur weiteren Verwendung entnommen werden.

Bei der Erfindung ist eine elektronische Steuerung 36 vorhanden, die einerseits mit einer Messeinrichtung 38 verbunden ist. Die Messeinrichtung 38 weist einen nicht dargestellten Messfühler auf, der im Beispiel im Wasserzulauf 14 des Reaktorbehälters 12 angeordnet ist und dort die Temperatur, den pH-Wert, den Salzgehalt, den Fett-/Ölgehalt und/oder den chemischen Sauerstoffbedarf des dem Reaktorbehälter 12 zuzuführenden Wassers misst.

In der elektronischen Steuerung 36 sind Daten über die Löslichkeit des Gases in Wasser in Abhängigkeit von einem oder mehreren der genannten Parameter hinterlegt. Auf dieser Grundlage ermittelt die elektronische Steuerung 36 eine für die angestrebte Reinigungswirkung optimale Durchflussmenge der Entspannungsventilanordnung 28 und steuert die Entspannungsventilanordnung 28 dementsprechend an.

Die elektronische Steuerung 36 ist außerdem verbunden mit einer weiteren Messeinrichtung 40, die im Schmutzwasserzulauf 32 angeordnet ist und dort einen Feststoffgehalt des Schmutzwassers ermittelt. Die von der weiteren Messeinrichtung 40 zur Verfügung gestellten Daten können von der elektronischen Steuerung 36 einerseits zur Steuerung des erhöhten Drucks im Reaktorbehälter 12 herangezogen werden, andererseits zur Steuerung der Räumleistung der Räumeinrichtung 30, die zu diesem Zweck ebenfalls mit der elektronischen Steuerung 36 verbunden ist.

Ebenfalls an dem Schmutzwasserzulauf 32 angeordnet ist eine Flockungsmittelzuführeinrichtung 42. Die Menge des dem Schmutzwasser 32 von der Flockungsmittelzuführeinrichtung 42 zugeführten Flockungsmittels kann von der elektronischen Steuerung 36 ebenfalls in Abhängigkeit des ermittelten Feststoffgehalts gesteuert werden.

In den nachfolgenden, nummerierten Absätzen sind weitere Ausführungsbeispiele der Erfindung zusammenfassend angegeben:
1. Mikroflotationsanlage (10) mit
   - einem Reaktorbehälter (12), der einen Wasserzulauf (14) aufweist und dazu ausgebildet ist, über den Wasserzulauf (14) zugeführtes Wasser unter erhöhtem Druck mit einem Gas anzureichern und das so gebildete Dispersionswasser an einem Dispersionswasserauslauf (18) zur Verfügung zu stellen,
   - einem Flotationsbecken (22), das einen Dispersionswasserzulauf (26) aufweist, und
   - einer Entspannungsventilanordnung (28), über die der Dispersionswasserauslauf (18) mit dem Dispersionswasserzulauf (26) verbunden ist, gekennzeichnet durch
   - eine Messeinrichtung (38), die dazu ausgebildet ist, einen der folgenden Parameter des über den Wasserzulauf (26) zuzuführenden Wassers zu messen: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt,
   - eine Verstelleinrichtung, mit der eine Durchflussmenge der Entspannungsventilanordnung (28) einstellbar ist, und
   - eine elektronische Steuerung (36), die mit der Messeinrichtung und der Verstelleinrichtung verbunden und dazu ausgebildet ist, die Durchflussmenge in Abhängigkeit eines von der Messeinrichtung gemessenen Parameters einzustellen.
2. Mikroflotationsanlage (10) nach Absatz 1, dadurch gekennzeichnet, dass in der elektronischen Steuerung (36) Daten über eine Abhängigkeit der Löslichkeit des Gases in Wasser von dem gemessenen Parameter hinterlegt sind.
3. Mikroflotationsanlage (10) nach Absatz 1 oder 2, dadurch gekennzeichnet, dass die elektronische Steuerung (36) dazu ausgebildet ist, die Durchflussmenge derart einzustellen, dass die Menge des mit dem Dispersionswasser über den Dispersionswasserzulauf (26) dem Flotationsbecken (22) zugeführten Gases von dem gemessenen Parameter unbeeinflusst bleibt.
4. Mikroflotationsanlage (10) nach einem der Absätze 1 bis 3, dadurch gekennzeichnet, dass die Entspannungsventilanordnung (28) ein Entspannungsventil mit einem verstellbaren Öffnungsgrad und die Verstelleinrichtung einen Stellantrieb aufweist, mit dem der Öffnungsgrad verstellbar ist.
5. Mikroflotationsanlage (10) nach einem der Absätze 1 bis 4, dadurch gekennzeichnet, dass die Entspannungsventilanordnung (28) eine Vielzahl von Entspannungsventilen aufweist.
6. Mikroflotationsanlage (10) nach einem der Absätze 1 bis 5, dadurch gekennzeichnet, dass die Messeinrichtung (38) einen Messfühler aufweist, der in dem Wasserzulauf (26), in dem Flotationsbecken (22) oder in einem Schmutzwasserzulauf (26) des Flotationsbeckens (22) angeordnet ist.
7. Mikroflotationsanlage (10) nach einem der Absätze 1 bis 6, dadurch gekennzeichnet, dass eine weitere Messeinrichtung (40) vorhanden ist, die dazu ausgebildet ist, einen Feststoffgehalt des Schmutzwassers zu messen, wobei die elektronische Steuerung (36) mit der weiteren Messeinrichtung (40) und mit einer Drucksteuerung des Reaktorbehälters (12) verbunden und dazu ausgebildet ist, den erhöhten Druck in dem Reaktorbehälter (12) in Abhängigkeit von dem mit der weiteren Messeinrichtung (40) gemessenen Feststoffgehalt zu steuern.
8. Mikroflotationsanlage (10) nach einem der Absätze 1 bis 7, dadurch gekennzeichnet, dass dem Flotationsbecken (22) eine steuerbare Räumeinrichtung (30) zugeordnet und die elektronische Steuerung (36) dazu ausgebildet ist, eine Räumleistung der Räumeinrichtung (30) in Abhängigkeit von dem gemessenen Feststoffgehalt zu steuern.
9. Mikroflotationsanlage (10) nach einem der Absätze 1 bis 8, dadurch gekennzeichnet, dass eine steuerbare Flockungsmittelzuführeinrichtung (42) vorhanden und die elektronische Steuerung (36) dazu ausgebildet ist, die Menge des von der Flockungsmittelzuführeinrichtung (42) zugeführten Flockungsmittels in Abhängigkeit von dem gemessenen Feststoffgehalt zu steuern.
10. Verfahren zum Betreiben einer Mikroflotationsanlage (10) mit den folgenden Schritten:
   - Herstellen von Dispersionswasser durch Anreichern von Wasser mit einem Gas unter erhöhtem Druck,
   - Zuführen des Dispersionswassers zu einem Flotationsbecken (22),
   - Messen eines der folgenden Parameter des Wassers: Temperatur, pH-Wert, Salzgehalt, Fett-/Ölgehalt, Chemischer Sauerstoffbedarf, Färbung, Trübung, Redoxpotential, Sauerstoffgehalt, Feststoffgehalt,
   - Steuern einer Durchflussmenge des dem Flotationsbecken (22) zugeführten Dispersionswassers in Abhängigkeit von dem gemessenen Parameter.
11. Verfahren nach Absatz 10, dadurch gekennzeichnet, dass die Durchflussmenge so gesteuert wird, dass die Menge des dem Flotationsbecken (22) mit dem Dispersionswasser zugeführten Gases von Änderungen des erfassten Parameters unbeeinflusst bleibt.
12. Verfahren nach Absatz 10 oder 11, dadurch gekennzeichnet, dass ein Feststoffgehalt von dem Flotationsbecken (22) zugeführten Schmutzwasser gemessen und der erhöhte Druck in dem Reaktorbehälter (12) in Abhängigkeit von dem gemessenen Feststoffgehalt gesteuert wird.
13. Verfahren nach einem der Absätze 10 bis 12, dadurch gekennzeichnet, dass eine Räumleistung einer dem Flotationsbecken (22) zugeordneten Räumeinrichtung (30) in Abhängigkeit von dem gemessenen Feststoffgehalt gesteuert wird.
14. Verfahren nach einem der Absätze 10 bis 13, dadurch gekennzeichnet, dass dem Flotationsbecken (22) ein Flockungsmittel zugeführt wird und eine Menge des zugeführten Flockungsmittels in Abhängigkeit von dem gemessenen Feststoffgehalt gesteuert wird.

### Liste der verwendeten Bezugszeichen

- 10: Mikroflotationsanlage
- 12: Reaktorbehälter
- 14: Wasserzulauf
- 16: Gasleitung
- 18: Dispersionswasserauslauf
- 20: Klarwasserauslauf
- 22: Flotationsbecken
- 24: Pumpe
- 26: Dispersionswasserzulauf
- 28: Entspannungsventilanordnung
- 30: Räumeinrichtung
- 32: Schmutzwasserzulauf
- 34: Klarwasserauslauf
- 36: elektronische Steuerung
- 38: Messeinrichtung
- 40: weitere Messeinrichtung
- 42: Flockungsmittelzuführeinrichtung

## Patentansprüche

1. Mikroflotationsanlage (10) mit
• einem Reaktorbehälter (12), der einen Wasserzulauf (14) aufweist und dazu ausgebildet ist, über den Wasserzulauf (14) zugeführtes Wasser unter erhöhtem Druck mit einem Gas anzureichern und das so gebildete Dispersionswasser an einem Dispersionswasserauslauf (18) zur Verfügung zu stellen,
• einem Flotationsbecken (22), das einen Dispersionswasserzulauf (26) aufweist,
• einer Entspannungsventilanordnung (28), über die der Dispersionswasserauslauf (18) mit dem Dispersionswasserzulauf (26) verbunden ist,
• einer Messeinrichtung (38), die dazu ausgebildet ist, mindestens einen Parameter des über den Wasserzulauf (14) zuzuführenden Wassers, von dem die Löslichkeit des Gases in dem Wasser abhängig ist, zu messen,
• einer Verstelleinrichtung, mit der eine Durchflussmenge der Entspannungsventilanordnung (28) einstellbar ist, und
• einer elektronischen Steuerung (36), die mit der Messeinrichtung (38) und der Verstelleinrichtung verbunden und dazu ausgebildet ist, die Durchflussmenge in Abhängigkeit des mindestens einen von der Messeinrichtung gemessenen Parameters einzustellen, **dadurch gekennzeichnet, dass**
• in der elektronischen Steuerung (36) Daten über die Abhängigkeit der Löslichkeit des Gases in Wasser von dem mindestens einen gemessenen Parameter hinterlegt sind und
• die elektronische Steuerung (36) dazu ausgebildet ist, die Durchflussmenge derart einzustellen, dass die Menge des mit dem Dispersionswasser über den Dispersionswasserzulauf (26) dem Flotationsbecken (22) zugeführten Gases von dem gemessenen Parameter unbeeinflusst bleibt, wobei
• eine weitere Messeinrichtung (40) vorhanden ist, die dazu ausgebildet ist, einen Feststoffgehalt des Schmutzwassers zu messen, wobei die elektronische Steuerung (36) mit der weiteren Messeinrichtung (40) und mit einer Drucksteuerung des Reaktorbehälters (12) verbunden und dazu ausgebildet ist, den erhöhten Druck in dem Reaktorbehälter (12) in Abhängigkeit von dem mit der weiteren Messeinrichtung (40) gemessenen Feststoffgehalt zu steuern.

2. Mikroflotationsanlage (10) nach Anspruch 1, **dadurch gekennzeichnet, dass** die Entspannungsventilanordnung (28) ein Entspannungsventil mit einem verstellbaren Öffnungsgrad und die Verstelleinrichtung einen Stellantrieb aufweist, mit dem der Öffnungsgrad verstellbar ist.

3. Mikroflotationsanlage (10) nach Anspruch 1 oder 2, **dadurch gekennzeichnet, dass** die Entspannungsventilanordnung (28) eine Vielzahl von Entspannungsventilen aufweist.

4. Mikroflotationsanlage (10) nach einem der Ansprüche 1 bis 3, **dadurch gekennzeichnet, dass** die Messeinrichtung (38) einen Messfühler aufweist, der in dem Wasserzulauf (26), in dem Flotationsbecken (22) oder in einem Schmutzwasserzulauf (26) des Flotationsbeckens (22) angeordnet ist.

5. Mikroflotationsanlage (10) nach einem der Ansprüche 1 bis 4, **dadurch gekennzeichnet, dass** dem Flotationsbecken (22) eine steuerbare Räumeinrichtung (30) zugeordnet und die elektronische Steuerung (36) dazu ausgebildet ist, eine Räumleistung der Räumeinrichtung (30) in Abhängigkeit von dem gemessenen Feststoffgehalt zu steuern.

6. Mikroflotationsanlage (10) nach einem der Ansprüche 1 bis 5, **dadurch gekennzeichnet, dass** eine steuerbare Flockungsmittelzuführeinrichtung (42) vorhanden und die elektronische Steuerung (36) dazu ausgebildet ist, die Menge des von der Flockungsmittelzuführeinrichtung (42) zugeführten Flockungsmittels in Abhängigkeit von dem gemessenen Feststoffgehalt zu steuern.

7. Mikroflotationsanlage (10) nach einem der Ansprüche 1 bis 6, **dadurch gekennzeichnet, dass** der mindestens eine Parameter mindestens einer der folgenden Parameter ist: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt.

8. Verfahren zum Betreiben einer Mikroflotationsanlage (10) mit den folgenden Schritten:
• Herstellen von Dispersionswasser durch Anreichern von Wasser mit einem Gas unter erhöhtem Druck,
• Zuführen des Dispersionswassers zu einem Flotationsbecken (22),
• Messen mindestens eines Parameter des Wassers, von dem die Löslichkeit des Gases in dem Wasser abhängig ist,
• **gekennzeichnet durch** das Steuern einer Durchflussmenge des dem Flotationsbecken (22) zugeführten Dispersionswassers in Abhängigkeit von dem mindestens einen gemessenen Parameter, derart, dass die Menge des dem Flotationsbecken (22) mit dem Dispersionswasser zugeführten Gases von Änderungen des erfassten Parameters unbeeinflusst bleibt,
• und Messen des Feststoffgehalts des dem Flotationsbecken (22) zugeführten Schmutzwassers und Steuern des erhöhten Drucks in dem Reaktorbehälter (12) in Abhängigkeit von dem gemessenen Feststoffgehalt.

9. Verfahren nach Anspruch 8, **dadurch gekennzeichnet, dass** eine Räumleistung einer dem Flotationsbecken (22) zugeordneten Räumeinrichtung (30) in Abhängigkeit von dem gemessenen Feststoffgehalt gesteuert wird.

10. Verfahren nach einem der Ansprüche 8 oder 9, **dadurch gekennzeichnet, dass** dem Flotationsbecken (22) ein Flockungsmittel zugeführt wird und eine Menge des zugeführten Flockungsmittels in Abhängigkeit von dem gemessenen Feststoffgehalt gesteuert wird.

11. Verfahren nach einem der Ansprüche 8 bis 10, **dadurch gekennzeichnet, dass** der mindestens eine gemessene Parameter mindestens einer der folgenden Parameter ist: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt.

## Claims

1. Microflotation assembly (10) with
• a reactor vessel (12) which has a water inlet (14) and is designed to enrich water supplied via the water inlet (14) with a gas under increased pressure and to make the dispersion water thus formed available at a dispersion water outlet (18),
• a flotation basin (22) comprising a dispersion water intake (26),
• an expansion valve assembly (28) via which the dispersion water outlet (18) is connected to the dispersion water intake (26),
• a measuring device (38) which is designed to measure at least one parameter of the water to be supplied via the water intake (14), on which the solubility of the gas in the water depends,
• an adjusting device with which a flow rate of the expansion valve assembly (28) can be adjusted, and
• an electronic controller (36) connected to the measuring device (38) and the adjusting device and adapted to adjust the flow rate in dependence on the at least one parameter measured by the measuring device, **characterized in that**
• data on the dependence of the solubility of the gas in water on the at least one measured parameter are stored in the electronic controller (36), and
• the electronic controller (36) is adapted to adjust the flow rate so that the amount of gas supplied to the flotation basin (22) with the dispersion water via the dispersion water intake (26) remains unaffected by the measured parameter, wherein
• a further measuring device (40) is provided which is configured to measure a particulate content of the wastewater, the electronic controller (36) being connected to the further measuring device (40) and to a pressure controller of the reactor vessel (12) and being configured to control the increased pressure in the reactor vessel (12) as a function of the particulate content measured with the further measuring device (40).

2. Microflotation assembly (10) according to claim 1, **characterized in that** the expansion valve assembly (28) comprises an expansion valve with an adjustable degree of opening and the adjusting device has an actuator with which the degree of opening can be adjusted.

3. Microflotation assembly (10) according to claim 1 or 2, **characterized in that** the expansion valve assembly (28) comprises a multitude of expansion valves.

4. Microflotation assembly (10) according to one of the claims 1 to 3, **characterized in that** the measuring device (38) comprises a probe which is arranged in the water intake (26), in the floatation basin (22) or in a wastewater intake (32) of the flotation basin (22).

5. Microflotation assembly (10) according to one of the claims 1 to 4, **characterized in that** a controllable removing device (30) is assigned to the flotation basin (22) and the electronic controller (36) is designed to control a removing capacity of the removing device (30) as a function of the measured particulate content.

6. Microflotation assembly (10) according to one of claims 1 to 5, **characterized in that** a controllable flocculanting agent feed (42) is provided and the electronic controller (36) is designed to control the amount of flocculant supplied by the flocculanting agent feed (42) as a function of the measured particulate content.

7. Microflotation assembly (10) according to one of claims 1 to 5, **characterized in that** the at least one parameter is at least one of the following parameters: Temperature, pH-value, salt content, fat/oil content, chemical oxygen demand, colouring, turbidity, redox potential, oxygen content, particulate content.

8. Method for operating a microflotation assembly (10) comprising the following steps:
• producing dispersion water by enriching water with a gas under elevated pressure,
• supplying the dispersion water to a flotation basin (22),
• measuring at least one parameter of the water on which the solubility of the gas in the water depends,
• **characterized by** controlling a flow rate of said dispersion water supplied to said flotation basin (22) in dependence on said at least one measured parameter such that the amount of gas supplied to said flotation basin (22) with said dispersion water remains unaffected by changes of said detected parameter,
• and measuring the particulate content of the wastewater supplied to the flotation basin (22) and controlling the increased pressure in the reactor vessel (12) as a function of the measured particulate content.

9. Method according to claim 8, **characterized in that** a removing capacity of a removing device (30) assigned to the flotation basin (22) is controlled as a function of the measured particulate content.

10. Method according to claims 8 or 9, **characterized in that** a flocculating agent is supplied to the flotation basin (22) and a quantity of the flocculating agent supplied is controlled as a function of the measured particulate content.

11. Method according to any of claims 8 to 10, **characterized in that** the at least one measured parameter is at least one of the following parameters: Temperature, pH-value, salt content, fat/oil content, chemical oxygen demand, colouring, turbidity, redox potential, oxygen content, particulate content.

## Revendications

1. Installation de micro-flottation (10) comprenant
• une cuve de réacteur (12), qui présente une arrivée d'eau (14) et qui est conçue de manière à ce que l'eau acheminée à une pression élevée par le biais de l'arrivée d'eau (14) soit enrichie d'un gaz et que l'eau de dispersion ainsi formée soit délivrée à une évacuation d'eau de dispersion (18),
• un bassin de flottation (22), qui présente une arrivée d'eau de dispersion (26),
• un système de soupapes de décompression (28), par lequel l'évacuation d'eau de dispersion (18) est reliée à l'arrivée d'eau de dispersion (26),
• un dispositif de mesure (38), qui est conçu de manière à mesurer au moins un paramètre de l'eau à acheminer par le biais de l'arrivée d'eau (14), dont dépend la solubilité du gaz dans l'eau,
• un dispositif de réglage, qui permet d'ajuster un débit du système de soupapes de décompression (28), et
• une commande électronique (36), qui est reliée au dispositif de mesure (38) et au dispositif de réglage et qui est conçue de manière à ajuster le débit en fonction au moins dudit paramètre mesuré par le dispositif de réglage, **caractérisée en ce que**
• les données relatives à la dépendance établie entre la solubilité du gaz dans l'eau et au moins ledit paramètre mesuré sont enregistrées dans la commande électronique (36) et
• la commande électronique (36) est conçue de manière à ajuster le débit de sorte que la quantité du gaz acheminé avec l'eau de dispersion jusqu'au bassin de flottation (22) par le biais de l'arrivée d'eau de dispersion (26) ne soit pas affectée par le paramètre mesuré, dans lequel
• un autre dispositif de mesure (40) est disponible, qui est conçu pour mesurer une teneur en substances solides de l'eau usée, dans lequel la commande électronique (36) est reliée à l'autre dispositif de mesure (40) et à une commande de pression de la cuve de réacteur (12) et est conçue de manière à asservir la pression élevée dans la cuve de réacteur (12) à la teneur en substances solides mesurée avec l'autre dispositif de mesure (40).

2. Installation de micro-flottation (10) selon la revendication 1, **caractérisée en ce que** le système de soupapes de décompression (28) présente une soupape de décompression avec un degré d'ouverture réglable et le dispositif de réglage comporte un actionneur, qui permet d'ajuster le degré d'ouverture.

3. Installation de micro-flottation (10) selon la revendication 1 ou 2, **caractérisée en ce que** le système de soupapes de décompression (28) présente de multiples soupapes de décompression.

4. Installation de micro-flottation (10) selon l'une des revendications 1 à 3, **caractérisée en ce que** le dispositif de mesure (38) présente une sonde de mesure, qui est disposée dans l'arrivée d'eau (26), dans le bassin de flottation (22) ou dans l'arrivée d'eau usée (26) du bassin de flottation (22).

5. Installation de micro-flottation (10) selon l'une des revendications 1 à 4, **caractérisée en ce qu'**un dispositif racleur (30) manoeuvrable est associé au bassin de flottation (22) et la commande électronique (36) est conçue de manière à asservir la capacité de déblayage du dispositif racleur (30) à la teneur en substances solides ayant été mesurée.

6. Installation de micro-flottation (10) selon l'une des revendications 1 à 5, **caractérisée en ce qu'**un dispositif d'alimentation en floculant (42) manoeuvrable est disponible et la commande électronique (36) est conçue de manière à asservir la quantité du floculant acheminé par le dispositif d'alimentation en floculant (42) à la teneur en substances solides ayant été mesurée.

7. Installation de micro-flottation (10) selon l'une des revendications 1 à 6, **caractérisée en ce qu'**au moins ledit paramètre est au moins l'un des paramètres suivants : température, valeur de pH, teneur en sel, teneur en graisses/huiles, demande chimique en oxygène, coloration, turbidité, potentiel d'oxydoréduction, teneur en oxygène, teneur en substances solides.

8. Procédé de fonctionnement d'une installation de micro-flottation (10) comprenant les étapes suivantes :
• la préparation d'eau de dispersion par l'enrichissement d'eau à l'aide d'un gaz à une pression élevée,
• l'amenée de l'eau de dispersion jusqu'à un bassin de flottation (22),
• la mesure d'au moins un paramètre de l'eau, dont dépend la solubilité du gaz dans l'eau,
• **caractérisé par** l'asservissement d'un débit de l'eau de dispersion acheminée jusqu'au bassin de flottation (22) au moins audit paramètre mesuré, de sorte que la quantité du gaz acheminé avec l'eau de dispersion jusqu'au bassin de flottation (22) ne soit pas affectée par les variations du paramètre saisi,
• et la mesure de la teneur en substances solides de l'eau usée acheminée jusqu'au bassin de flottation (22) et l'asservissement de la pression élevée dans la cuve de réacteur (12) à la teneur en substances solides ayant été mesurée.

9. Procédé selon la revendication 8, **caractérisé en ce qu'**une capacité de déblayage d'un dispositif racleur (30) associé au bassin de flottation (22) est asservie à la teneur en substances solides ayant été mesurée.

10. Procédé selon l'une des revendications 8 ou 9, **caractérisé en ce qu'**un floculant est acheminé jusqu'au bassin de flottation (22) et une quantité du floculant acheminé est asservie à la teneur en substances solides ayant été mesurée.

11. Procédé selon l'une des revendications 8 à 10, **caractérisé en ce qu'**au moins ledit paramètre mesuré est au moins l'un des paramètres suivants : température, valeur de pH, teneur en sel, teneur en graisses/huiles, demande chimique en oxygène, coloration, turbidité, potentiel d'oxydoréduction, teneur en oxygène, teneur en substances solides.
